# EUROPEAN PATENT APPLICATION

(11) **EP 1 231 809 A1**
(43) Date of publication of application: **14.08.2002**
(21) Application number: 01955547.3
(22) Date of filing: 01.08.2001
(51) Int. Cl.: H04Q 9/00

(54) **REMOTE-CONTROLLED DEVICE**

(30) Priority: 17.08.2000 JP 2000247281
(71) Applicant: Daikin Industries, Ltd., Osaka-shi, Osaka 530-8323 (JP)
(72) Inventor: FUKADA, K. Shiga-seisakusho of Daikin Ind., Ltd., Kusatsu Shiga 525-0044 (JP); SHIMIZU, H. Shiga-seisakusho of Daikin Ind., Ltd., Kusatsu Shiga 525-0044 (JP); TSUCHIYA, T. Shiga-seisakusho Daikin Ind., Ltd., Kusatsu Shiga 525-0044 (JP); KADOBAYASHI, K. Shiga-seisakusho Daikin Ind., Ltd., Kusatsu Shiga 525-0044 (JP)
(74) Representative: HOFFMANN - EITLE
(86) International application number: JP0106618
(87) International publication number: WO0215631

(57) **Abstract**

A remote-controlled device has a main unit 2 having a display section 3, and a remote control 1 capable of remotely controlling the main unit 2, wherein the remote control 1 is equipped with operation means 6, 6 for controlling the main unit 2, and colors corresponding to the respective operation means 6, 6 are shown on or around the operation means 6, 6, and wherein an operation of the operation means 6 causes a corresponding one of colors substantially identical to said colors to be displayed in the display section 3 of the main unit 2. Thus, operations executed by remote control or characteristic values set thereby can be visually recognized on the main unit side.

## Description

### TECHNICAL FIELD

The present invention relates to a remote-controlled device which makes it possible to visually display, on the main unit side, an operating state set by remote-control operation.

### BACKGROUND ART

In recent years, for electrical appliances such as air conditioners and audio equipment, it has been widely practiced to remotely control their various operations with remote controls. For example, a remote control that remotely controls an indoor unit of an air conditioner enables turn-ON/OFF of operation, changeover of operation mode among heating operation, cooling operation and dehumidifying operation, and further various types of control such as air flow rate control and temperature control.

In this connection, the indoor unit is provided with a pilot lamp formed of a light-emitting diode (LED) or the like, where performing an operation of turning the unit from OFF to ON state causes the pilot lamp to go from OFF to ON state, while performing an operation of turning the unit from ON to OFF state causes the pilot lamp to go from ON to OFF state. Therefore, the remote-control operator, for ON/OFF switch of operation, is enabled to discriminate whether or not the unit is in operation by visually recognizing the ON/OFF state of the pilot lamp.

However, for some operation other than the turn-ON/OFF of operation, for example, for a switch of operation mode to heating operation, cooling operation or the like, a setting operation therefor, i.e., pressing an operation-mode switching button several times is performed on the remote control side to select a desired operation mode, but the pilot lamp on the indoor unit side remains in the ON state during the above operation, where the selected operation mode would not be displayed. As a result, there has been a problem that it is impossible to discriminate, during the ON state of operation, whether or not the unit is operating in a mode designated by the remote-control side as far as the indoor unit side is viewed.

### DISCLOSURE OF THE INVENTION

The present invention having been accomplished to solve these and other problems of the prior art, an object of the present invention is to provide a remote-controlled device which makes it possible to visually recognize, on the main unit side, operations performed by the remote control or characteristic values set thereby.

In order to achieve the above object, there is provided a remote-controlled device comprising a main unit having a display section, and a remote control capable of remotely controlling the main unit, wherein the remote control is equipped with operation means for controlling the main unit, and colors corresponding to the respective operation means are shown on or around the operation means, and wherein an operation of the operation means causes a corresponding one of colors substantially identical to said colors to be displayed in the display section of the main unit.

In the remote-controlled device of this constitution, the operation means each bear a color indication of operation corresponding to the operation means, while an operation of the operation means causes a color corresponding to this operation to be displayed also in the display section of the main unit. Thus, by a one-to-one correspondence between colors displayed on the operation means on the remote control side and colors displayed in the displays section on the main unit side, the operator is enabled to visually recognize whether or not an instructed operation is being performed, depending on whether or not the color shown on the operation means that the operator himself/herself has operated is the same as the color of the display section of the main unit. Further, even those other than the operator are enabled not only to easily know which operation is currently being performed by seeing the color displayed in the display section of the main unit, but also to judge whether or not the operation that the operator has executed is suitable for the current state.

In one embodiment of the present invention, the operation means are colored in themselves.

In this embodiment, the operation means are colored on themselves, and the colors of the operation means and the colors to be displayed in the display section of the main unit are made identical to each other. Thus, the aforementioned effects can be developed more remarkably.

Also, there is provided a remote-controlled device comprising a main unit having a display section, and a remote control capable of remotely controlling the main unit, wherein the remote control is equipped with operation means for controlling the main unit, and characteristic values to be set by the respective operation means are shown in different colors on or around the operation means, and wherein an operation of the operation means causes a corresponding one of colors substantially identical to the colors of the characteristic values to be displayed in the display section of the main unit.

In the remote-controlled device of this constitution, characteristic values to be set by the respective operation means are shown in different colors in the operation means, and an operation of the operation means causes a color substantially identical to the color of a set characteristic value to be displayed in the display section of the main unit. As a result of this, the operator is enabled to visually recognize whether or not an instructed setting has been selected, depending on whether or not the color of the characteristic value that the operator has set is the same as the color displayed in the display section of the main unit. Further, even those other than the operator are enabled not only to easily know what settings are currently selected, by seeing the color displayed in the display section of the main unit, but also to judge whether or not the setting that the operator has executed is suitable for the current state.

In one embodiment of the present invention, one of the colors of the characteristic values shown in different colors on the remote control corresponding to a color of a current-state characteristic value is displayed on the display section of the main unit.

In this embodiment, one of the colors of the characteristic values shown in different colors on the remote control corresponding to a color of a current-state characteristic value is displayed on the display section of the main unit. As a result of this, it can be decided whether or not the current state has reached a set value or a target value, by comparing the colors shown in different colors on the remote-control side operation means in correspondence to the respective characteristic values, and the color displayed by the display section of the main unit side, with each other.

### BRIEF DESCRIPTION OF THE DRAWINGS

Fig. 1 is a schematic front view of an air-conditioner indoor unit and a schematic plan view of its remote control according to the present embodiment; and
Fig. 2 is a partial schematic front view and plan view showing a modification example of the embodiment.

### BEST MODE FOR CARRYING OUT THE INVENTION

Next, a concrete embodiment of the remote-controlled device of the present invention is described in detail with reference to the accompanying drawings.

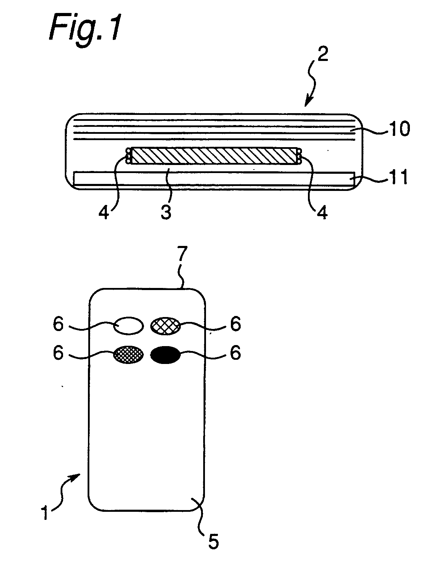

In this embodiment, the present invention is applied to an indoor unit of an air conditioner and a remote control that remotely controls the indoor unit. Fig. 1 is a schematic front view of an air-conditioner indoor unit 2 and a schematic plan view of its remote control 1. First, in a front face of the indoor unit 2, an inlet port 10 is provided upward and an outlet port 11 is provided downward. Between these inlet port 10 and outlet port 11 is provided a main-unit display section 3 for displaying, for example, the operating state that the indoor unit 2 is performing, such as heating operation or cooling operation. A reflector, a light guide plate or the like capable of diffusing light is employed in the main-unit display section 3, and three LEDs 4, 4 (e.g., red, blue, green, etc.) of different colors are provided on both right-and-left sides of the main-unit display section 3, each in a pair. Then, adjusting the brightness of these LEDs 4, 4, respectively, enables stepless changes of color.

On the other hand, the remote control 1 that remotely controls the indoor unit 2 has operation buttons 6, 6 (control means) which show various operation modes and which are provided independently for heating, cooling, dehumidification, and the like on the front-face side of a remote-control main body 5. The remote control 1 is so controlled that pressing once the operation button 6 of an operation mode that the user desires causes the operation in that mode to be immediately started. In this case, the operation buttons 6, 6 have indications of characters such as heating and cooling, respectively, as well as colors corresponding to the individual operation modes. That is, in this embodiment, the operation buttons 6, 6 are colored differently from one another; for example, the operation button 6 for heating is red, the operation button 6 for cooling is blue, the operation button 6 for dehumidification is green, and the operation button 6 for humidification is orange. Further, in addition to the operation buttons 6, 6, the remote control 1 are also equipped with unshown operation ON/OFF buttons, or various types of operation buttons for adjusting room temperature, air flow rate, air flow direction or the like, or for performing the setting of current time or a timer or other tasks. Then, according to operations of these operation buttons, optical signals such as infrared rays are issued from a transmitting section 7 located at an upper end portion of the remote-control main body 5 so as to be transmitted to the indoor unit 2.

Furthermore, this embodiment is so arranged that when an operation mode such as heating, cooling and dehumidification is selected by using the remote control 1, the same color as the color of the selected operation button 6 is displayed in the main-unit display section 3 of the indoor unit 2. That is, according to the settings in this case, pressing the operation button 6 of blue indicating cooling causes the main-unit display section 3 to turn blue with the cooling operation started, and pressing the operation button 6 of red indicating heating causes the main-unit display section 3 to turn red with the heating operation started. Table 1 below shows the colors of the operation buttons 6 on the remote control 1 side corresponding to the individual operation modes, as well as the colors to be displayed in the main-unit display section 3 on the indoor unit 2 side.

**Table 1:**

| | Types of operation buttons | | | |
|---|---|---|---|---|
| | Cooling button | Heating button | Dehumidifying button | Humidifying button |
| Color of button of remote control | Blue | Red | Green | Orange |
| Color of main-unit display section | Blue | Red | Green | Orange |

As shown above, according to this embodiment, by virtue of the arrangement that the color of the operation button 6 for an operation on the remote control 1 side is the same as the color to be displayed in the main-unit display section 3 of the indoor unit 2, the operator is enabled to visually recognize whether or not the instructed operation is being performed, depending on whether or not the color of the operation button 6 that the operator himself/herself has pressed is the same as the color of the main-unit display section 3 of the indoor unit 2. Further, even those other than the operator are enabled not only to easily know which operation is currently being performed by seeing the color displayed in the main-unit display section 3, but also to judge whether or not the operation that the operator has executed is suitable for the current indoor environment.

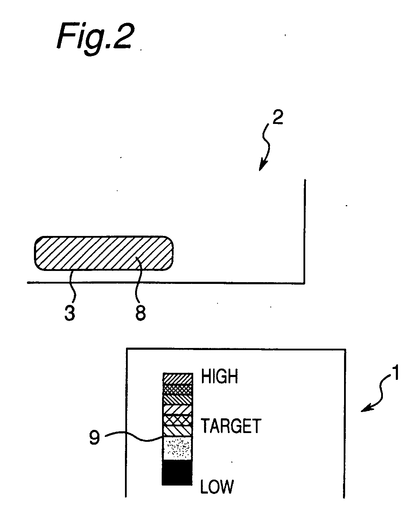

Next, a modification example of the above remote-controlled device is explained. Fig. 2 is a partial schematic front view of the indoor unit 2 and a partial plan view of its remote control 1. As compared with the foregoing embodiment, this modification example differs therefrom in that a color liquid crystal 8 is used for the main-unit display section 3, and that characteristic values of individual operations are indicated in different colors, that is, indices 9 (using, e.g., nameplates, color liquid crystal or the like) of colors corresponding to the individual characteristic values are provided in the vicinity of the operation buttons on the remote control 1 side.

Consequently, according to this modification example, for example, when the operator has set a target temperature to 20°C by using the temperature setting button, which is one of the operation buttons, a color corresponding to 20°C in the color indices 9 is displayed in the main-unit display section 3 on the indoor unit 2 side. As a result of this, the operator is enabled to visually recognize whether or not the instructed target temperature has been selected, depending on whether or not the color corresponding to the target temperature that the operator himself/herself has set is the same as the color displayed in the main-unit display section 3. Further, even those other than the operator are enabled not only to easily know what degrees the targeted set temperature is, by seeing the color displayed in the main-unit display section 3, but also to judge whether or not the set temperature that the operator has executed is suitable for the current indoor environment.

Furthermore, according to another example of the above modification, it is arranged that, for example, when the operator has set the target temperature to 20°C by using the temperature setting button, a color corresponding to a current indoor temperature from among the colors indicated at the indices 9 is displayed in the main-unit display section 3 on the indoor unit 2 side. In this case, since the color of the main-unit display section 3 can be displayed over a range from light colors to deep colors, using this as an indicator makes it possible to show the degree of reach toward a target temperature. That is, with the color display set on the basis of a target temperature that the operator has set (20°C in this case), where the color of the main-unit display section 3 is displayed deeper when the room temperature is lower than the target temperature (in the case of heating operation), and where the color is displayed lighter conversely when the room temperature is higher (in the case of cooling operation), and with the control that the color of the main-unit display section 3 gradually changes in response to changes of the indoor temperature, it can be decided whether or not the current indoor temperature has reached the target temperature by comparing the color displayed by the main-unit display section 3 with the indices 9 on the remote control 1 side.

Although an embodiment of the remote-controlled device of the present invention has been described above, yet the present invention is not limited to this embodiment, and may be carried out in various changes. That is, although the remote control 1 of the indoor unit 2 of an air conditioner has been described in the above embodiment, the invention may similarly be applied also to remote controls provided in other devices such as audio equipment. Also, although the description has been made by taking the operation mode buttons or temperature setting button on the remote control 1 side in the above embodiment, yet the present invention may be carried out similarly also with other operation buttons. Further, without coloring the buttons themselves on the remote control 1 side, colors corresponding to individual operations may be shown around those buttons. Further, although three LEDs 4, 4 of different colors have been provided on both right-and-left sides of the main-unit display section 3, respectively, the number of LEDs may be either more than or less than the number.

## Claims

1. A remote-controlled device comprising a main unit (2) having a display section (3), and a remote control (1) capable of remotely controlling the main unit (2), wherein the remote control (1) is equipped with operation means (6), (6) for controlling the main unit (2), and colors corresponding to the respective operation means (6), (6) are shown on or around the operation means (6), and wherein an operation of the operation means (6) causes a corresponding one of colors substantially identical to said colors to be displayed in the display section (3) of the main unit (2).

2. The remote-controlled device according to Claim 1, wherein the operation means (6) are colored in themselves.

3. A remote-controlled device comprising a main unit (2) having a display section (3), and a remote control (1) capable of remotely controlling the main unit (2), wherein the remote control (1) is equipped with operation means (6), (6) for controlling the main unit (2), and characteristic values to be set by the respective operation means (6) are shown in different colors on or around the operation means (6), and wherein an operation of the operation means (6) causes a corresponding one of colors substantially identical to the colors of the characteristic values to be displayed in the display section (3) of the main unit (2).

4. The remote-controlled device according to Claim 3, wherein one of the colors of the characteristic values shown in different colors on the remote control (1) corresponding to a color of a current-state characteristic value is displayed on the display section (3) of the main unit (2).
